# EUROPEAN PATENT APPLICATION

(11) **EP 0 735 325 A1**
(43) Date of publication of application: **02.10.1996**
(21) Application number: 96200825.6
(22) Date of filing: 27.03.1996
(51) Int. Cl.: F24C 15/20, A47J 37/12, A21B 5/08

(54) **A method and a device for processing foodstuffs**

(30) Priority: 29.03.1995 NL 9500599
(71) Applicant: Kiremko B.V., 3417 XS Montfoort (NL); Doomernik B.V., 5342 XA Oss (NL)
(72) Inventor: Pigeaud, Maurits Maarten, 1412 HL Naarden (NL); Tak, Theo, 5051 PV Goirle (NL)
(74) Representative: Vollebregt, Cornelis Jacobus, Ir.

(57) **Abstract**

The invention relates to a method for processing foodstuffs, whereby said foodstuffs are carried through an oven, which oven contains a liquid which has been heated up to a high temperature. The oven is of closed design and the vapours being released during the processing of the foodstuffs are supplied to a heat exchanger, whilst residual gases are supplied to a burner installation. Water can be converted into steam in the heat exchanger, which steam is at least partially supplied to a steam-fed thermocompressor in order to raise the temperature of the steam generated in said heat exchanger.

## Description

The invention relates to a method and a device for processing foodstuffs, whereby said foodstuffs are carried through an oven, which oven contains a liquid which has been heated up to a high temperature.

Ovens of this type are frequently used for frying, or treating otherwise, foodstuffs such as chips, snacks, fish, prawn crackers, etc. Usually this takes place in open ovens, whereby the vapours being released from the oven during the processing of the foodstuffs are discharged to the outside via a chimney. A great deal of heat is lost thereby, whilst in addition to that this leads to odour nuisance in the neighbourhood.

In order to overcome this it has been proposed in US Patent No. 3,762,394 to pass the vapours being released through condensers, in order to allow water vapour and fat particles present in the vapours being released to precipitate, whilst the residual gases are supplied to a burner installation.

A drawback of the proposal according to said US patent is the fact that an open oven is used, as a result of which large amounts of ambient air are sucked in during operation, passed through the condensers and supplied to the burner installation. An excessive amount of air will be supplied to the burner installation thereby, which excessive amount of air must be unnecessarily heated, which has a negative effect on the efficiency of the installation. In addition to that the operation of the condenser is affected by the large amounts of air being passed through the condensers.

According to the invention a method for processing foodstuffs according to the preamble of claim 1 is proposed, wherein a closed oven is used, whilst the foodstuffs are supplied to and discharged from the oven via sluice means.

By using the method according to the invention it is prevented that undesirably large amounts of ambient air are sucked in via the oven during operation, so that a large part of the heat which escapes via the vapours being released can be recovered in an optimum manner, whilst it is prevented that an excessive amount of air is supplied to the burner installation during the discharge of the residual gases as combustion air to a burner installation, so that said burner installation can be operated in an efficient manner.

According to another aspect of the invention an efficient device for processing foodstuffs is obtained when the oven is a closed oven comprising sluice means for the supply and discharge of foodstuffs as defined in claim 6.

In this manner a device of simple and efficient design may be obtained, by means of which foodstuffs can be processed in an effective manner.

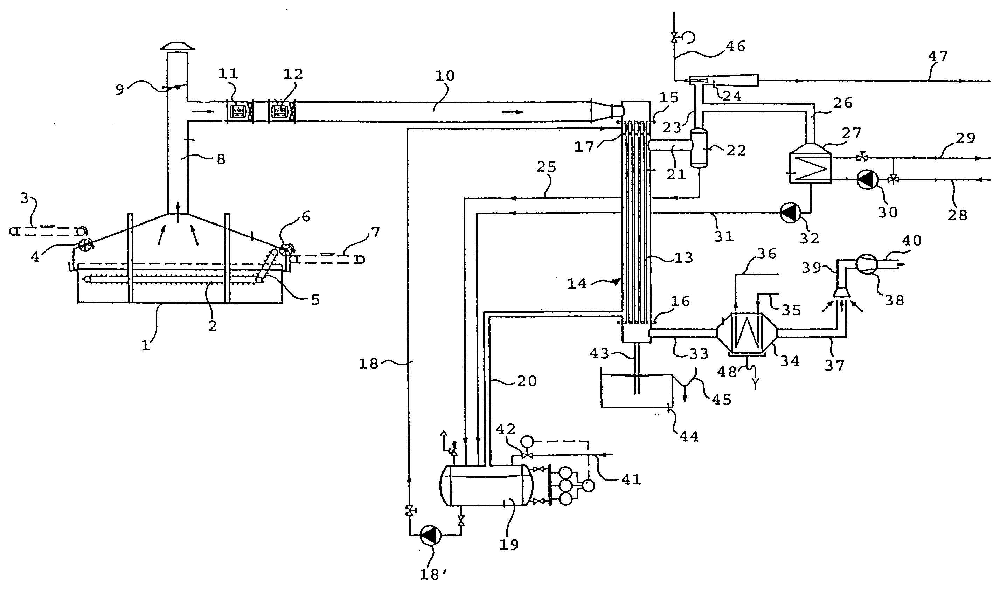

The invention will be explained in more detail hereafter with reference the accompanying Figure, which diagrammatically shows an embodiment of a device according to the invention.

The Figure shows a closed oven 1, in which a conveyor 2 is disposed for transporting foodstuffs from the left to the right (seen in the Figure) through a liquid present in the oven 1, for example a suitable frying fat for frying chips or the like, which has been heated up to a high temperature.

The foodstuffs to be treated are thereby supplied to the oven 1 by using for example a conveyor belt 3 and a sluice means provided on the oven, for example a compartmental wheel sluice 4. The foodstuffs transported through the oven by means of the conveyor 2 are supplied, by means of a further upwardly sloping conveyor 5, to a further compartmental wheel sluice 6 for discharging the treated food products to a discharge conveyor 7 or the like.

The compartmental wheel sluices 4 and 6 are of a construction which is known per se and ensure that practically no air will enter the oven and that no air and/or vapour will escape from the oven during the supply and discharge respectively of foodstuffs to and from the oven.

Connected to the upper side of the oven 1 is a chimney pipe 8, which will be closed during operation by means of a valve 9 provided near its upper end. Upstream of the valve 9 a discharge pipe 10 is connected to chimney 8, in which one or more fans 11 and/or 12 are disposed one behind the other.

Discharge pipe 10 is connected to the upper end of a heat exchanger or condenser 14 comprising a bunch of vertical pipes 13. The vertical pipes are conventionally provided between two pipe plates 15 and 16. It will be apparent that vapours and/or gases (air) flowing from pipe 10 into the chamber positioned above pipe plate 15 will flow downwards through the pipes 13 to the chamber of heat exchanger 14 positioned under lower pipe plate 16.

A further plate 17 is disposed in the interior of the housing of the heat exchanger 14, a short distance below plate 15. The diameter of the holes provided in this plate 17 for passing the pipes 13 therethrough is slightly larger than the external diameter of the pipes 13.

A pipe 18 is connected to the part of the heat exchanger 14 positioned between plates 15 and 17, said pipe 18 accommodating a pump 18' and communicating with a tank 19. Connected to the upper side of the tank 19 is one end of a further pipe 20, said pipe with its other end being connected to the lower part of the space of heat exchanger 14 positioned between pipe plates 15 and 16.

Just below plate 17 a pipe 21 is connected to the heat exchanger 14, said pipe connecting the interior of the housing of heat exchanger 14 to a vessel 22. Connected to the upper side of vessel 22 is an upwardly extending pipe 23, which connects vessel 22 to a thermocompressor 24 known per se.

Connected to the bottom end of vessel 22 is a pipe 25, which connects the bottom end of vessel 22 to tank 19.

A pipe 26 is connected to pipe 23 at a point located between the ends of pipe 23, said pipe 26 connecting pipe 23 to a heat exchanger 27. A liquid supply pipe 28 and a liquid discharge pipe 29 are connected to heat exchanger 27. A circulating pump 30 is incorporated in liquid supply pipe 28.

A pipe 31 is provided between the bottom end of heat exchanger 27 and tank 19. A circulating pump 32 is incorporated in pipe 31.

One end of a pipe 33 is connected to the part of the housing of heat exchanger 14 positioned under lower pipe plate 16, said pipe with its other end communicating with a heat exchanger 34. Supply and discharge pipes 35 and 36 respectively for the supply and discharge respectively of a liquid to be heated, for example water, are connected to said heat exchanger 34.

Furthermore a discharge pipe 37 is connected to heat exchanger 34, said pipe with its free end being positioned opposite a suction pipe 39 connected to a fan 38. A pressure pipe 40 connected to said fan communicates with a burner installation (not shown).

Furthermore a liquid supply pipe 41 is connected to tank 19. A valve 42 provided in liquid supply pipe 41 can be opened and closed in dependence on the liquid level detected in tank 19 in order to ensure that a sufficient amount of liquid is present in tank 19 at all times.

A pipe 43 is furthermore connected to the bottom end of heat exchanger 14, said pipe opening into a receptacle 44. A gutter 45 abutting against said receptacle is provided near an overflow edge at the upper side of said receptacle.

The operation of the above-described device is as follows. During operation the foodstuffs will be charged, generally in a continuous manner, to the interior of the closed oven 1 via sluice means 4, be moved through the oven by means of conveyor 2 and then be discharged from the oven by means of conveyor 5 via sluice means 6.

During this treatment of the foodstuffs water vapour will escape via chimney 8. In order to form an idea it may be mentioned that when for example ± 15 tons of chips are treated per hour, ± 4750 kg of water vapour will escape via chimney 8. Because of the fact that the oven is substantially closed, only a comparatively small amount of air will be carried along with said escaping water vapour. In practice it will furthermore not be possible to prevent that fat particles are carried along with the escaping water vapour.

In contrast to the practice which has been usual so far, whereby the escaping water vapour, air and the like are allowed to escape via chimney 8, the vapours are discharged to heat exchanger 14, which is a condenser in this case, via pipe 10 during normal operation.

Vapours escaping from the oven will flow downwards through the interior of pipes 13 thereby, whilst water being pumped up from tank 19 is supplied to the upper end of the condenser via pipe 18 and will flow along the outside of pipes 13 in the form of a thin film. In practice it has become apparent that as a result of the exchange of heat between the vapours flowing from the oven through pipes 13 and the water on the outside of the pipes, this water flowing along pipes 13 can be converted into steam having a temperature of 92 - 95 °C. Said steam can flow to thermocompressor 24 via vessel 22. Steam supplied from heat exchanger or condenser 14 can be heated, by means of high-pressure steam supplied to the thermocompressor via a pipe 46, to form saturated steam of 100 - 110 °C, which may be supplied to a user, such as for example a drying plant or the like, via a discharge pipe 47.

Part of the steam from heat exchanger or condenser 14 may also be supplied from vessel 22 to heat exchanger 27, in which water supplied via pipe 28 can be heated to a temperature of 70 - 90 °C. Any condensate which may form in vessel 22 is discharged to tank 19 via pipe 25. In a similar manner the condensate formed in heat exchanger 27 is pumped to tank 19, via pipe 31, by means of pump 32.

Any condensate being formed in pipes 13 will flow along with the fat particles present in the vapours being discharged from the oven into the water-filled fat catcher 44 via pipe 43. The fat will float on the water surface and can be discharged via gutter 45.

Residual vapours and gases flowing from the bottom ends of pipes 13 will be supplied to heat exchanger 34 and transmit heat to liquid, for example water, supplied via pipe 35 and discharged via pipe 36. The water vapour which condensates at this location may in turn be discharged via a pipe 48, possibly to vessel 19 again.

The air and/or other inert gases will be discharged via pipe 37 and, as is indicated by arrows at the end of pipe 37 facing away from heat exchanger 34, be sucked into pipe 39 together with ambient air by means of fan 38. Said fan 38 pushes said air to for example a burner installation of a boiler, by means of which steam is generated, which may for example be suitable for heating the oven.

From the above it will be apparent that by using the device according to the invention it becomes possible to utilize the heat released during use of the oven optimally and at the same time prevent air and/or other gases that may smell objectionably from being released by supplying said air and/or other gases to a burner installation.

## Claims

1. A method for processing foodstuffs, whereby said foodstuffs are carried through an oven, which oven contains a liquid which has been heated up to a high temperature, whilst the vapours being released during the processing of the foodstuffs are supplied to a heat exchanger and residual gases are supplied to a burner installation, characterized in that a closed oven is used and that the foodstuffs are supplied to and discharged from the oven via sluice means.

2. A method according to claim 1, characterized in that water is converted into steam in said heat exchanger, which steam is at least partially supplied to a steam-fed thermocompressor in order to raise the temperature of the steam generated in said heat exchanger.

3. A method according to claim 1 or 2, characterized in that at least part of the steam generated in said heat exchanger is supplied to a further heat exchanger, in order to heat liquid whilst condensation of the steam supplied from said heat exchanger takes place.

4. A method according to claim 3, characterized in that condensation water formed in said further heat exchanger is led back to a tank, from where it is pumped up in order to be supplied to said first heat exchanger.

5. A method according to any one of the preceding claims, characterized in that condensate formed in said first heat exchanger from vapours coming from said oven is supplied to a receptacle, whilst residual vapours are supplied to a heat exchanger and air and/or gases that are present are supplied to the intake of a fan, which transports combustion air to a burner installation.

6. A device for carrying out a method according to any one of the preceding claims, said device being provided with an oven to which a discharge pipe is connected, which discharge pipe communicates with a heat exchanger and also with a discharge pipe for air and/of gases, which communicates with a burner installation, characterized in that said oven is a closed oven comprising sluice means for the supply and discharge of foodstuffs.

7. A device according to claim 6, characterized in that at least one fan is provided in the discharge pipe connected to said oven.

8. A device according to claim 6 or 7, characterized in that said heat exchanger is provided with a substantially vertical bunch of pipes, through which vapours being discharged from said oven are carried, whilst means are provided for forming a liquid film along the outer circumference of said pipes, in such a manner that said liquid will flow from the top downwards along said pipes.

9. A device according to any one of the claims, characterized in that a discharge pipe for steam generated in the heat exchanger is connected to an upper end of said heat exchanger.

10. A device according to claim 9, characterized in that said steam discharge pipe is connected to a thermocompressor.

11. A device according to claim 9 or 10, characterized in that said steam discharge pipe communicates with a further heat exchanger.

12. A device according to any one of the claims, characterized in that discharge pipe for condensate is connected to the bottom end of said first heat exchanger.

13. A device according to any one of the claims, characterized in that a further heat exchanger is connected to the bottom end of said first heat exchanger.

14. A device according to claim 13, characterized in that a discharge pipe for air and/or gases is connected to said further heat exchanger for discharging said air and/or gases to a burner installation.
